(19) Europäisches Patentamt
European Patent Office
Office européen des brevets

(11) **EP 1 336 035 B1**

(12) **EUROPÄISCHE PATENTSCHRIFT**

(45) Veröffentlichungstag und Bekanntmachung des Hinweises auf die Patenterteilung:
**01.04.2015 Patentblatt 2015/14**

(21) Anmeldenummer: **01997684.4**

(22) Anmeldetag: **22.11.2001**

(51) Int Cl.:
*F02B 37/16* (2006.01)   *F02M 31/00* (2006.01)
*G01M 15/00* (2006.01)   *F01N 3/22* (2006.01)

(86) Internationale Anmeldenummer:
**PCT/AT2001/000371**

(87) Internationale Veröffentlichungsnummer:
**WO 2002/042730 (30.05.2002 Gazette 2002/22)**

(54) **VERFAHREN ZUR VERSORGUNG EINER VERBRENNUNGSMASCHINE MIT KONDITIONIERTEM VERBRENNUNGSGAS, VORRICHTUNG ZUR DURCHFÜHRUNG DIESES VERFAHRENS, VERFAHREN ZUR BESTIMMUNG DER SCHADSTOFFMENGEN IM ABGAS EINER VERBRENNUNGSMASCHINE, UND VORRICHTUNG ZUR DURCHFÜHRUNG DIESES VERFAHRENS**

METHOD FOR SUPPLYING AN INTERNAL COMBUSTION ENGINE WITH CONDITIONED COMBUSTION GAS, DEVICE FOR CARRYING OUT SAID METHOD, METHOD FOR DETERMINING THE QUANTITIES OF POLLUTANTS IN THE EXHAUST GASES OF AN INTERNAL COMBUSTION ENGINE, AND DEVICE FOR CARRYING OUT SAID METHOD

PROCEDE POUR L'ALIMENTATION D'UN MOTEUR A COMBUSTION INTERNE EN GAZ DE COMBUSTION CONDITIONNE, DISPOSITIF POUR L'EXECUTION DE CE PROCEDE, PROCEDE POUR LA DETERMINATION DES QUANTITES DE POLLUANTS DANS LES GAZ D'ECHAPPEMENT D'UN MOTEUR A COMBUSTION INTERNE ET DISPOSITIF POUR L'EXECUTION DE CE PROCEDE

(84) Benannte Vertragsstaaten:
**DE ES FR GB IT SE**

(30) Priorität: **22.11.2000 AT 8632000**
**10.09.2001 PCT/AT01/00282**

(43) Veröffentlichungstag der Anmeldung:
**20.08.2003 Patentblatt 2003/34**

(73) Patentinhaber: **AVL List GmbH**
**8020 Graz (AT)**

(72) Erfinder:
• **SIMPERL, Johann**
**A-8051 Thal (AT)**
• **ERLACH, Hans**
**A-9125 Kühnsdorf (AT)**

(74) Vertreter: **Patentanwälte Pinter & Weiss OG**
**Prinz-Eugen-Straße 70**
**1040 Wien (AT)**

(56) Entgegenhaltungen:
DE-A- 3 544 247    DE-A- 4 015 818
DE-A- 4 231 681    DE-A- 4 317 867
DE-A- 19 857 058   US-A- 4 096 697
US-A- 5 113 692    US-A- 5 175 997
US-A- 5 406 788    US-A- 6 112 523

**Beschreibung**

Die Erfindung betrifft ein Verfahren zur Versorgung einer Verbrennungsmaschine mit konditioniertem Verbrennungsgas, insbesonders Luft, vorzugsweise in Prüfständen, umfassend die Zuführung von feuchte- und/oder temperaturkonditioniertem Verbrennungsgas zur Verbrennungsmaschine, wobei zu jedem Zeitpunkt eine im wesentlichen konstante, vollständig konditionierte Menge des Verbrennungsgases bereitgestellt wird, welche zumindest der von der jeweiligen Verbrennungsmaschine maximal benötigten Menge entspricht, wobei von der Verbrennungsmaschine nicht benötigtes Verbrennungsgas an der Verbrennungsmaschine vorbeigeleitet und mit deren Abgas gemischt wird, und wobei das Verbrennungsgas/Abgas-Gemisch hinter der Verbrennungsmaschine abgesaugt wird, vorzugsweise mit definiertem Unterdruck, bezogen auf den Umgebungsdruck, als auch eine Vorrichtung sowie eine Vorrichtung zur Versorgung einer Verbrennungsmaschine mit konditioniertem Verbrennungsgas, welche eine Versorgungsleitung zur Verbrennungsmaschine für feuchte- und/oder temperaturkonditioniertes Verbrennungsgas, allenfalls ein Gebläse in der Versorgungsleitung, umfasst, wobei die Versorgungsleitung für zumindest die von der jeweiligen Verbrennungsmaschine maximal benötigte Menge an Verbrennungsgas ausgelegt ist und von dieser Versorgungsleitung eine mit der Verbrennungsmaschine verbindbare Ansaugleitung abzweigt, wobei eine mit der Verbrennungsmaschine verbindbare Abgasleitung hinter der Abzweigung der Ansaugleitung in die Versorgungsleitung einmündet.

Der Zustand der Ansaugluft beeinflusst in starkem Maße das Betriebsverhalten einer Verbrennungsmaschine. So erhöht sich bei Ottomotoren zum Beispiel das Motordrehmoment mit ansteigendem Luftruck um ca. +0,12% pro Hektopascal. Eine Temperaturerhöhung der angesaugten Umgebungsluft um 1° C verursacht im gleichen Fall beispielsweise einen Leistungsabfall von ca.-0,5%. Der Feuchtegehalt der Ansaugluft hat unmittelbar nur wenig Einfluss auf die Motorleistung, jedoch sind Auswirkungen auf die Abgasemissionen, besonders der Stickoxide, nicht zu vernachlässigen, was sowohl bei Otto- als auch Dieselmotoren der Fall ist. Ein höherer Feuchtegehalt der Ansaugluft ermöglicht bei Ottomotoren außerdem einen früheren Zündzeitpunkt bis zum Erreichen der Klopfgrenze, was bei Abstimmungsarbeiten am Motorenprüfstand zu berücksichtigen ist.

Da die Entwicklungsarbeiten von Verbrennungsmaschinen aufgrund der weltweit strenger werdenden Abgasgesetzgebung und der höheren Leistungsdichte immer höhere Anforderungen bezüglich der Reproduzierbarkeit und Genauigkeit der Versuchsergebnisse stellt, ist es daher erforderlich, sämtliche Einflüsse, welche die Versuchsergebnisse bei der Motorenentwicklung beeinflussen, so weit wie möglich zu eliminieren. Da zu diesen Einflüssen auch der Zustand der Ansaugluft zählt, ist es notwendig diese zu konditionieren, um vergleichbare Versuchsbedingungen am Motorenprüfstand zu erreichen.

Bekannte Systeme zur Konditionierung der Ansaugluft für Verbrennungsmaschinen sind am Markt käuflich verfügbar (z.B. "Combustion Air Conditioning Unit der Firma AVL-List GmbH, Graz/Österreich). Diese Systeme werden aber direkt an das Luftversorgungssystem der Verbrennungsmaschine angeschlossen, und müssen auf diese Weise bei Änderungen des Betriebszustandes der Verbrennungsmaschine und daraus folgenden Änderungen des Luftdurchsatzes direkt den Änderungen des Luftdurchsatzes der Verbrennungsmaschine folgen. So beträgt beispielsweise der maximale Luftdurchsatz eines Ottomotors etwa das 40-fache des minimalen Luftdurchsatzes. Es ist daher verständlich, dass bei schnellen und dynamischen Änderungen des Luftdurchsatzes der Verbrennungsmaschine bekannte Systeme diesen Änderungen nur eingeschränkt Folgen können und daher während der dynamischen Luftdurchsatzänderungen nur eine schlechte Regelgüte der Luftzustände erreicht wird. Ein Beispiel für eine derartige bekannte Anlage ist in der DE 40 15 818 A beschrieben. Es wird dabei ein System zur Konditionierung der Verbrennungsluft für eine Verbrennungsmaschine mit interner Verbrennung geoffenbart. Dieses System ist jedoch ein geschlossenes System, so dass es nicht mit einer konstanten Luftmenge betrieben werden kann, sondern dem jeweiligen Bedarf der Verbrennungsmaschine nachgefahren werden muss. Dies ist aber bei hochdynamischen Vorgängen kaum in ausreichender und genauer Weise möglich. Das System "AirCon" der Firma FEV Motorentechnik GmbH, Aachen/Deutschland, arbeitet nach dem Prinzip einer "Luftdusche", wobei konditionierte Verbrennungsluft auf den Motoransaugstutzen geblasen wird, wobei sich der Motor nur die tatsächlich benötigte Menge abnimmt und der Überschuss am Motorabsaugstutzen vorbeigeblasen wird.

In der DE 25 36 047 A1 ist dagegen eine reine Unterdrucksimulation beschrieben, während keinerlei Vorkehrungen für eine komplette Konditionierung der Verbrennungsluft getroffen sind. Darüber hinaus ist in der bekannten Vorrichtung ein Behälter vorgesehen, in welchen die für den Motor gedachte Verbrennungsluft und das Abgas des Motors gelangen und sich dort allenfalls auch vermischen bzw. gegenseitig beeinflussen können, wodurch eine sichere und konstante Bedingungen bietende Konditionierung kaum möglich ist. Speziell für hoch dynamische Betriebszustände ist bei einer Vorrichtung wie etwa in der DE 25 36 047 A1 offenbart die Gefahr von Durchmischung von Verbrennungsluft und Abgas aufgrund von Druckpulsationen, großräumigen Turbulenzen, thermischen Gradienten usw. sehr groß. Dabei wird überdies die Verbrennungsluft je nach Bedarf vom Motor in den Behälter gesaugt, was die konstante Konditionierung ebenfalls kaum durchführbar werden läßt.

Gegenstand der DE 35 44 247 A sind interne Vorgänge von Verbrennungskraftmaschinen, die erst mit dem Eintritt des Verbrennungsgases in die Luftverdichtersektion der Maschine beginnen. Es wird daher der Verbrennungsmaschine als gesamtes keine vollständig konditionierte und über die Zeit konstante Menge an Verbrennungsluft zugeführt, und eine Bypassleitung existiert lediglich um die Verdichtersektion herum, in welcher jedoch keine konditionierte Verbrennungsluft geführt wird. Da die Bypassleitung noch vor der Konditioniersektion abzweigt, wird nur genau diejenige Menge an Verbrennungsluft konditioniert und der Verbrennungsmaschine zugeführt, die momentan benötigt wird.

Auch die DE DE 42 31 681 A betrifft einen internen Prozess einer Verbrennungsmaschine mit interner Verbrennung, ohne dass dabei ein Bypass um die Verbrennungsmaschine vorgesehen wäre. Es gibt auch keinerlei Ausgleich für allfällig im Überschuss zugeführtes Verbrennungsgas, so dass dieser Prozess nicht mit konstanter konditionierter Menge an Verbrennungsluft verwirklicht werden kann.

Ein System mit variierender Zufuhr von Verbrennungsgas ist in der US 6 112 523 A beschrieben, wobei auch hier das Hauptaugenmerk auf die motorinternen Vorgänge gelegt ist, insbesonders auf das Turbolader-System und interne Waste Gates. Die Maschine wird jedoch nicht mit einer konstanten, vollständig konditionierten Menge an Verbrennungsgas betrieben. Dies gilt auch für die Systeme der DE 198 57 059 A, US 5 406 788 A, US 5 175 997 A und and DE 43 17 867 A. Von diesen weist lediglich die DE 198 57 059 A einen By-pass auf, der jedoch von Abgas und in entgegen der Richtung der Verbrennungsluft durchströmt wird.

Die Aufgabe der Erfindung ist es, diese und weitere Nachteile der herkömmlichen Konditionierungsverfahren und -Vorrichtungen zu vermeiden und eine sichere, konstante Konditionierung der Verbrennungsluft auch unter dynamischen und hoch dynamischen Betriebsbedingungen weitgehend zu ermöglichen.

Diese Aufgabe in Verbindung mit der Konditionierung des Verbrennungsgases wird erfindungsgemäß dadurch gelöst, dass zwischen dem konditionierten Verbrennungsgas und dem Abgas bzw. Verbrennungsgas/Abgas-Gemisch hinter der Verbrennungsmaschine ein Druckgefälle zwischen 0,3 und 5 mbar, vorzugsweise zwischen 0,5 und 3 mbar, eingestellt wird. Damit ist es ermöglicht, sowohl auf der Ansaug- als auch der Abgasseite des Motors auf Drücke zwischen zumindest -300 mbar und +300 mbar zu konditionieren. Dies erfolgt durch eine Art CVS-Verfahren mit zumindest einem niedrigen Überschuss an Verbrennungsgas von zumindest dem ca. 1,2-fachen der maximal vom Motor benötigten Menge. Das geringe Druckgefälle stellt auch sicher, dass für eine korrekte Unter- bzw. Überdrucksimulation sowohl der Einlass als auch der Auslass der Verbrennungsmaschine bzw. vor- oder nachgeschalteter Systeme auf im wesentlichen dem gleichen Druckniveau gehalten sind. Dabei erfolgt die Istwerterfassung für die Druckregelung vorzugsweise am Ansaugtrakt des Motors, d. h. der Druck am Auslass der Motorabgasanlage folgt dem Druck am Ansaugtrakt innerhalb des vordefinierten Druckgefälles. Durch die Gesamtheit der Grundmerkmale des erfindungsgemäßen Verfahrens muss die Konditionierung nicht dynamisch nachgeführt werden, sondern der Motor am Prüfstand zweigt sich aus einer für die maximal nötige Menge an Verbrennungsluft die jeweils für den aktuellen Betriebszustand benötige Menge an Verbrennungsluft ab. Die vorgeschaltete Konditionierungsanlage muss ja ohnedies für die maximale Menge an Verbrennungsluft ausgelegt sein, wobei im erfindungsgemäßen Fall die Konditionierungsstrecke von einem konstanten Massenstrom passiert wird und daher die Regelung entsprechend einfach möglich ist. Zwischen der Abzweigung der tatsächlich vom Motor benötigen Verbrennungsluft und dem Austritt des Abgases wird eine geringe und ungefähr einstellbare Druckdifferenz im System erhalten und damit auch die Substanztrennung zwischen der Verbrennungsluft und dem Abgas sichergestellt.

Gemäß einer Ausführungsvariante des erfindungsgemäßen Verfahrens kann auch vorgesehen sein, dass das Verbrennungsgas der Verbrennungsmaschine unter erhöhtem Druck, bezogen auf den Umgebungsdruck, zugeführt bzw. nicht benötigtes Verbrennungsgas an der Verbrennungsmaschine vorbeigeleitet wird.

Gemäß einem weiteren vorteilhaften Merkmal der Erfindung ist vorgesehen, dass der Durchfluss unabhängig vom Absolutdruck im Wesentlichen konstant gehalten wird. Mit Durchfluss kann hier und auch im Folgenden sowohl ein Massen- als auch ein Volumsdurchfluss als strömender Menge gemeint sein. Bei konstantem Durchfluss sind große und allenfalls auch dynamische Druckschwankungen unter Erhaltung des geringen Regelaufwandes für die Gaskonditionierung und damit die entsprechend einfache Auslegung der Anlage möglich. Diverse bekannte Einrichtungen können zum Konstanthalten des Durchflusses von Verbrennungsgas (Luft) oder in weiterer Folge auch anderen Gasen, etwa von (verdünntem) Abgas, zum Einsatz kommen. Beispielsweise können Roots-Gebläse und ähnliche Gasfördereinrichtungen eingesetzt werden, die pro Arbeitstakt oder Umdrehung ein konstantes Gasvolumen fördern, sodass die strömende Masse von Druck und Temperatur des Gases und von der Arbeitstaktfrequenz oder Drehzahl abhängen. Auch kritische Düse(n), unter anderem Venturi-Düse(n), mit nachgeschalteter Gasfördereinrichtung (Sauggebläse) können vorgesehen sein, bei denen die Menge an strömendem Gas durch das Produkt aus der Querschnittfläche an der jeweils engsten Stelle der Düse(n) und der sich dort ergebenden Schallgeschwindigkeit gegeben ist. Das bedeutet, dass das strömende Volumen und die strömende Masse nur mehr von Druck und Temperatur des Gases vor der Düse abhängen, nicht aber vom Druck hinter der Düse. Eine weitere Ausführungsform für Einrichtungen zum Konstanthalten eines Durchflusses wären unterkritische Düsen, bei denen die Abhängigkeit vom Hinterdruck durch eine entsprechende Mess- und Regeltechnik berücksichtigt wird. Alle diese Einrichtungen zum Konstanthalten des Durchflusses müssen in der Regel kalibriert werden. Der interessierende Durchfluss (z.B. Massendurchfluss oder Volumsdurchfluss unter aktuellen oder unter Normbedingungen) ergibt sich dann aus einem entsprechenden Kalibrierfaktor der Einrichtung und aus Druck und Temperatur des Gases vor der Einrichtung.

Um die Höhensimulation noch weiter verbessern zu können, ist gemäß einem weiteren Merkmal der Erfindung vorgesehen, dass die unmittelbare Umgebung der Verbrennungsmaschine auf dem selben Druck gehalten wird wie das konditionierte Verbrennungsgas. Damit herrschen überall im Bereich der Verbrennungsmaschine die gleichen Bedingungen, was die Simulation der jeweils gewünschten Seehöhe am Prüfstand wesentlich exakter ermöglicht.

Vorteilhafterweise wird die Verbrennungsmaschine vom konditionierten Verbrennungsgas umströmt, wodurch es möglich ist, so die Ansaugluft auch als realitätsnahe Umgebungsluft des Motors, insbesondere auch bezüglich der Temperatur, zu nutzen. Dazu muss aber beachtet werden, dass ausreichend Luft durch die By-Pass-Leitung gefördert wird, sodass in der Box aufgrund der Erwärmung durch den Motor keine unzulässigen und insbesondere keine zu hohen Temperaturen entstehen. Beispielsweise kann es für eventuell vorgesehene Gasfördereinrichtungen oder für eine eventuell angeschlossene Abgasmesstechnik vorteilhaft sein, wenn das dem Abgas zugeführte Verdünnungsgas nicht heißer als 30°C, vorzugsweise nicht heißer als 25°C, ist. Andererseits aber soll es weder im unverdünnten noch im verdünnten Abgas zur Kondensation des enthaltenen Wasserdampfes kommen können, weshalb auch geachtet werden muss, dass die Temperatur des verdünnten Abgases nicht zu niedrig ist, beispielsweise nicht unter 50°C sinkt. Je nach Anwendungsfall kann es daher erforderlich sein, die Temperatur des Gases in der Zufuhr-Leitung gesondert einzustellen, beispielsweise mittels eines zusätzlichen Wärmetauschers.

Die eingangs gestellte Aufgabe wird gemäß der vorliegenden Erfindung auch durch eine Vorrichtung zur Versorgung einer Verbrennungsmaschine mit konditioniertem Verbrennungsgas gelöst, bei welcher Einrichtungen zur Einstellung eines Druckunterschiedes im Bereich zwischen 0,3 und 5 mbar, vorzugsweise zwischen 0,5 und 3 mbar, zwischen der Abzweigung der Ansaugleitung und der Einmündung der Abgasleitung in jeweils die Versorgungsleitung vorgesehen sind. Dadurch kann für alle Betriebszustände des Motors, vom Leerlauf bis zur Volllast, die sichere Substanzentrennung zwischen Verbrennungsluft und Abgas gewährleistet werden. Neben den bereits oben in bezug auf das Verfahren genannten Vorteilen weist die beschriebene, erfindungsgemäße Vorrichtung mit ihrer Versorgungsleitung den Vorteil auf, dass eine gute Strömungscharakteristik vorliegt, die für die zum Motor gelangende Verbrennungsluft sicherstellt, dass keine Rückmischung von Abgas und damit keine Veränderungen der Parameter der konditionierten Verbrennungsluft auftreten.

Um eine Unterdruckregelung unter Beibehaltung aller zuvor genannten Vorteile zu ermöglichen bzw. sicherzustellen, sind gemäß einem vorteilhaften Ausführungsbeispiel Einrichtungen zur Sicherstellung einer minimalen, zumindest der Diffusionsgeschwindigkeit von Abgas im konditionierten Verbrennungsgas entsprechenden, Strömungsgeschwindigkeit zwischen der Abzweigung der Ansaugleitung und der Einmündung der Abgasleitung vorgesehen.

Neben der Möglichkeit, die erfindungsgemäße Vorrichtung an eine zentrale Konditionierungsanlage anzuschließen ist es auch möglich, die Konditionierung mit in der erfindungsgemäßen Vorrichtung einzuschließen, wobei in diesem Fall Einrichtungen zur Einstellung und Regelung der Temperatur und/oder Feuchte vor der Abzweigung der Ansaugleitung zur Verbrennungsmaschine in der Versorgungsleitung vorgesehen sind, beispielsweise Gaskühler, Tropfenabscheider, Gaserhitzer und Dampfzufuhrleitungen, vorzugsweise mit Dampfdosierventilen.

Um eine Überdruckregelung durchführen zu können, ist bei einer Ausführungsform der erfindungsgemäßen Vorrichtung vorgesehen, dass vor der Abzweigung der Ansaugleitung eine Gasfördereinrichtung und hinter der Einmündung der Abgasleitung eine Regeleinrichtung für den Gasdurchfluss vorgesehen sind.

Andererseits ist eine Unterdruckregelung möglich, wenn vor der Abzweigung der Ansaugleitung eine Regeleinrichtung für den Gasdurchfluss und hinter der Einmündung der Abgasleitung eine Gasfördereinrichtung vorgesehen sind. Beide der zuvor genannten Regelungsvarianten sind selbstverständlich auch kombinierbar.

Um Schwierigkeiten bei der Auslegung der Gasfördereinrichtung, insbesonders in der Form von Zentrifugalgebläsen oder Radialgebläsen, vorzubeugen, welche bei Betrieb der Anlage mit größerem Unterdruck und/oder aufgrund der Förderung eines Abgas/LuftGemisches auftreten können, ist vorteilhafterweise zwischen der Verbrennungsmaschine und der Gasfördereinrichtung zumindest ein Wärmetauscher vorgesehen. Damit ist ein Unterdruckbetrieb selbst bis ca. 500 mbar (was ca. 6.000 m Seehöhe entspricht) möglich.

Bezüglich der Auswahl der Gasfördereinrichtung sind je nach den Anforderungen geeignete Typen auszuwählen. Im Fall von beispielsweise Rootsgebläsen sind zwei wesentliche Vorteile gegeben. Einerseits sind Unterdrücke bis 550 mbar (notwendig um -500mbar am Saugrohr zu gewährleisten) kein Problem, während Zentrifugalgebläse in den gewünschten Baugrößen ein Limit von ca. 450mbar aufweisen. Weiters kann mittels eines drehzahlgeregelten Rootsgebläses sowohl Unterdruck wie auch Überdruck geregelt werden und somit ist keine Regelklappe am Ende des Sammelbehälters notwendig, da mittel Rootsgebläse auch gedrosselt werden kann. Vorteilhafterweise ist jedoch für den Unterdruckbetrieb ein Drosselventil nach der Konditionierstrecke vor dem Motor angeordnet , um die Konditionierstrecke nicht mit dem hohen Unterdruck zu belasten.

Das Rootsgebläse fördert annähernd konstanten Volumenstrom bei konstanter Drehzahl unabhängig vom Luftdruck. Jedoch ändert sich der Luftmassenstrom entsprechend der Druckänderung. Um jetzt den Luftmassenstrom für die Konditionierstrecke annähernd konstant zu halten, kann das Drosselventil abhängig vom Luftdrucksollwert entsprechend gestellt werden (diese Stellungen werden bei Inbetriebnahme ermittelt und im Regler entsprechend hinterlegt). Die Druckregelung erfolgt dann über die Drehzahlregelung des Rootsgebläses (z.B. über PID Regler).

Ein Nachteil des Rootsgebläses liegt in der maximal möglichen Temperatur des zugeführten Gasgemisches, die auf ca. 50 - 60°C beschränkt ist. Sollten also lediglich Unterdrücke bis ca. 350mbar erforderlich sein, kann auf Zentrifugalgebläse zurückgegriffen werden, die mit einer Temperatur bis ca. 150°C gefahren werden können.

In einfacher und sicherer Weise ist die Mengenregelung durchführbar, wenn die Regeleinrichtungen für den Gasdurchfluss durch Regelklappen gebildet sind.

In vorteilhafter Weise kann dabei parallel zu den Regelklappen zumindest ein Feinregelventil vorgesehen sein.

Weiters kann eine Substanzentrennung sichergestellt werden, wenn zwischen der Abzweigung der Ansaugleitung und der Einmündung der Abgasleitung eine Gasfördereinrichtung vorgesehen ist. Durch diese Einrichtung ist auch die gewünschte Druckdifferenz zwischen Einlass- und Abgasseite des Motors einstell- bzw. beeinflussbar.

Gemäß einer weiteren Ausführungsform oder in Kombination mit einer der oben beschriebenen Vorrichtungen kann die Substanzentrennung auch dadurch erzielt werden, dass Einrichtungen zur Laminarisierung der Strömung in der Versorgungsleitung, vorzugsweise zumindest zwischen der Abzweigung der Ansaugleitung und der Einmündung der Abgasleitung, vorgesehen sind.

Eine weitere Alternative zur Erzielung dieses Effektes ist es, wenn in der Versorgungsleitung zwischen der Abzweigung der Ansaugleitung und der Einmündung der Abgasleitung ein Wellenwiderstand und/oder ein Schalldämpfer vorgesehen ist.

Für die einfache und wirtschaftliche Auslegung der Anlage sollen hochdynamische Vorgänge an der Verbrennungsmaschine keine oder nur geringste Auswirkungen auf die benötigte Menge an konditioniertem Gas haben. Daher ist gemäß einer vorteilhaften Ausführungsform der Erfindung die Vorrichtung dadurch gekennzeichnet, dass zumindest eine der Gasfördereinrichtungen in Regelverbindung mit der bezüglich der Verbrennungsmaschine gegenüberliegenden Regeleinrichtung für den Gasdurchfluss steht. Damit ist dann ein Regelkonzept verwirklichbar, das selbst bei dynamischen Druckänderungen den Durchfluss durch die Anlage im wesentlichen konstant erhält.

Vorteilhafterweise ist dabei die Förderleistung der Gasfördereinrichtung in Abhängigkeit von der Stellung der gegenüberliegenden Regeleinrichtung einstellbar. Wenn beispielsweise eine Drosselklappe zur Änderung des in der Anlage gefahrenen Druckes - oder eines Druckverlaufes - verstellt wird, wird gleichzeitig die Drehzahl beispielsweise einer als Zentrifugalgebläse ausgeführten Gasfördereinrichtung derart angepasst, dass unabhängig vom Absolutdruck die Durchflussmenge an konditioniertem Gas im wesentlichen konstant bleibt.

Um eine möglichst realitätsnahe Prüfung der Motoren unter genau definierten Bedingungen zu ermöglichen, ist gemäß einem weiteren Erfindungsmerkmal vorgesehen, dass der Abstand zwischen der Abzweigung der Ansaugleitung und der Einmündung der Abgasleitung im wesentlichen dem Abstand zwischen dem Luftfiltereingang und dem Ende der Auspuffanlage des Fahrzeuges entspricht, dessen Verbrennungsmaschine mit dem konditionierten Verbrennungsgas versorgt wird.

Gemäß einem weiteren Merkmal der Erfindung ist vorgesehen, dass ein geschlossener Raum zur Aufnahme der Verbrennungsmaschine vorgesehen ist, welcher Raum mit dem Abschnitt zwischen der Abzweigung der Ansaugleitung und der Einmündung der Abgasleitung der Versorgungsleitung verbunden ist. Damit wird der zu prüfende Motor mit dem in der Verbindungsleitung herrschenden Druck beaufschlagt, der somit auch von außen auf den Motor wirkt, was insbesondere bei der Höhensimulation (niedriger Luftdruck) von großem Vorteil ist.

Vorteilhafterweise ist dabei im Abschnitt der Versorgungsleitung zwischen der Abzweigung der Ansaugleitung und der Einmündung der Abgasleitung ein geschlossener Raum zur Aufnahme der Verbrennungsmaschine vorgesehen. Dieser durch eine abschließbare und gegenüber der Umgebung abdichtbare Box gebildete Raum kann ein Bestandteil des Motorprüfstands sein und also am Prüfstand verbleiben, wenn ein anderer Motor am Prüfstand getestet werden soll. Vorteilhafterweise aber ist die Box ein Bestandteil der Palette, auf die der Motor aufgebaut wird und die zum Transport und zum Andocken des Motors an den Prüfstand dient.

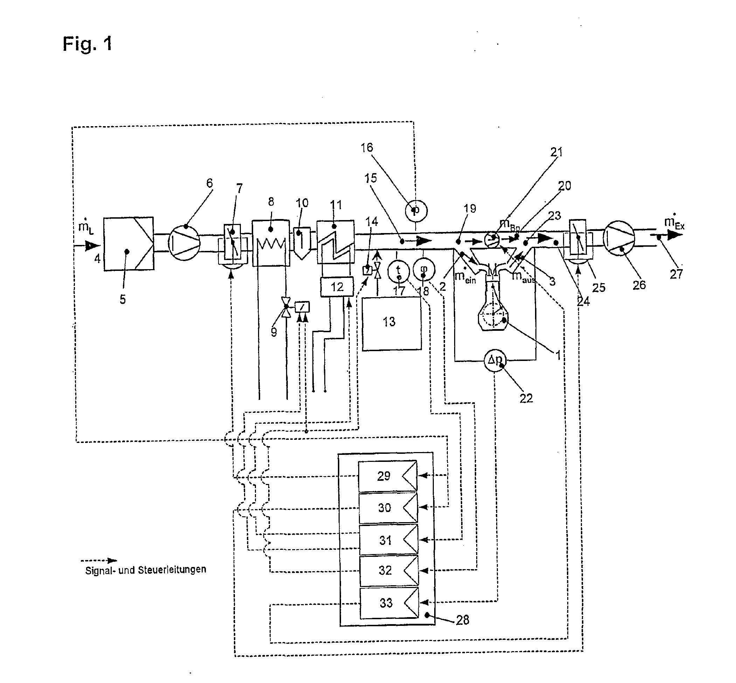

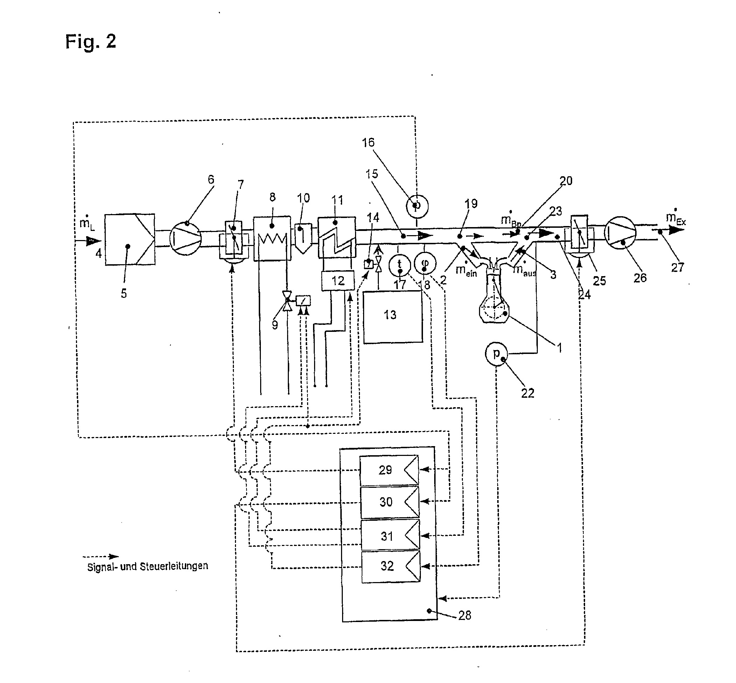

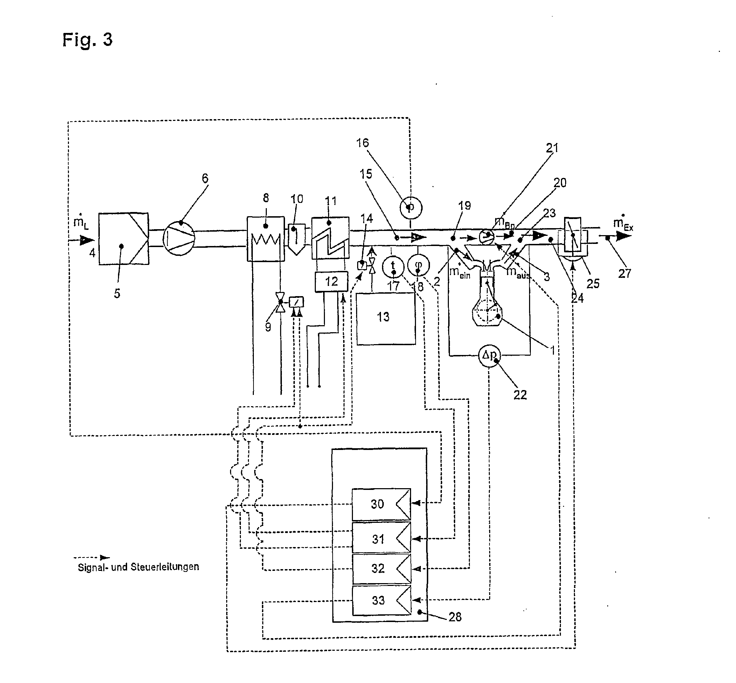

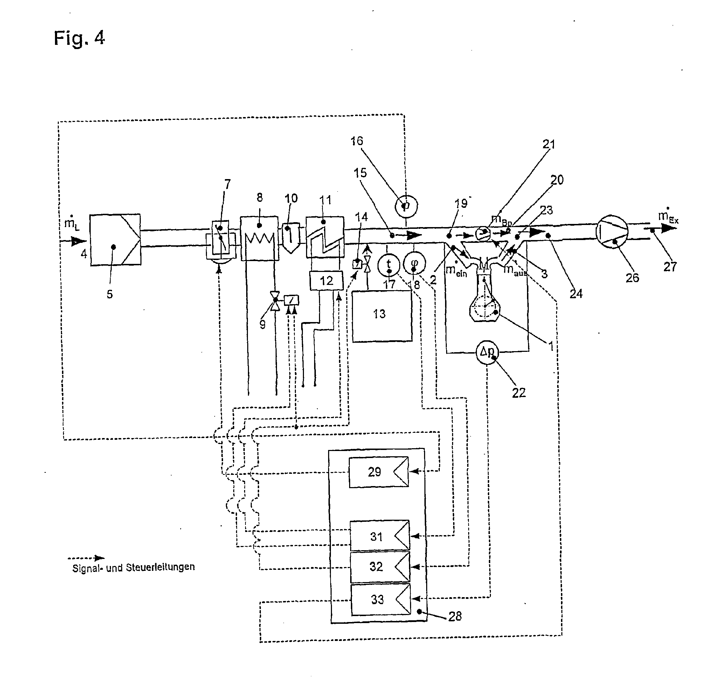

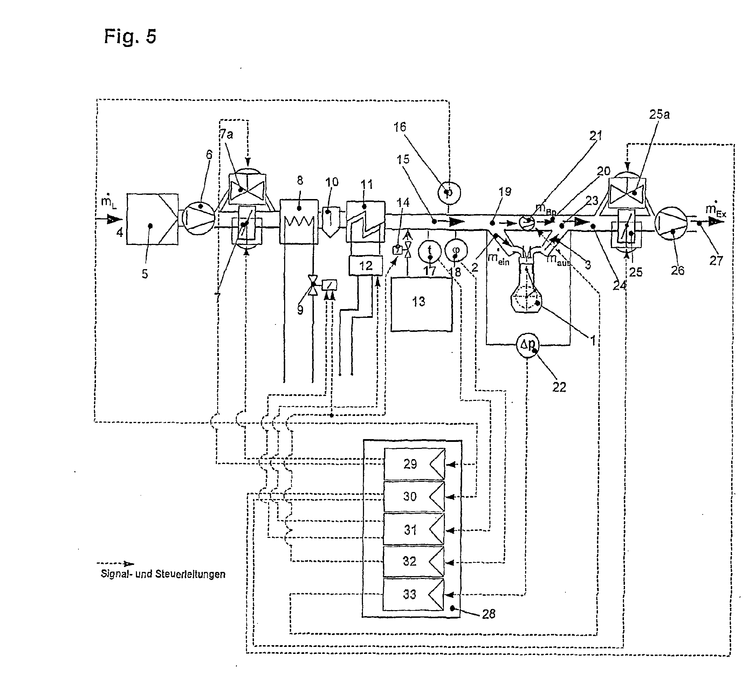

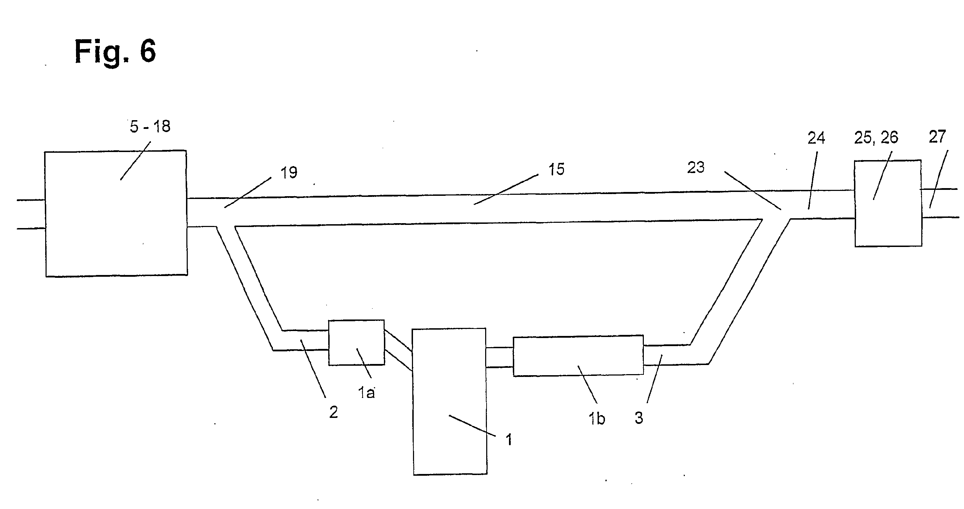

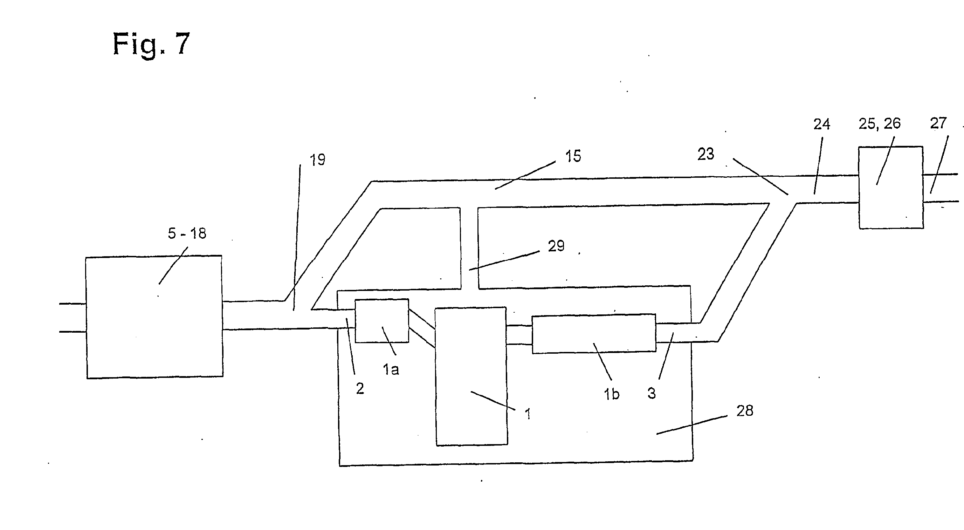

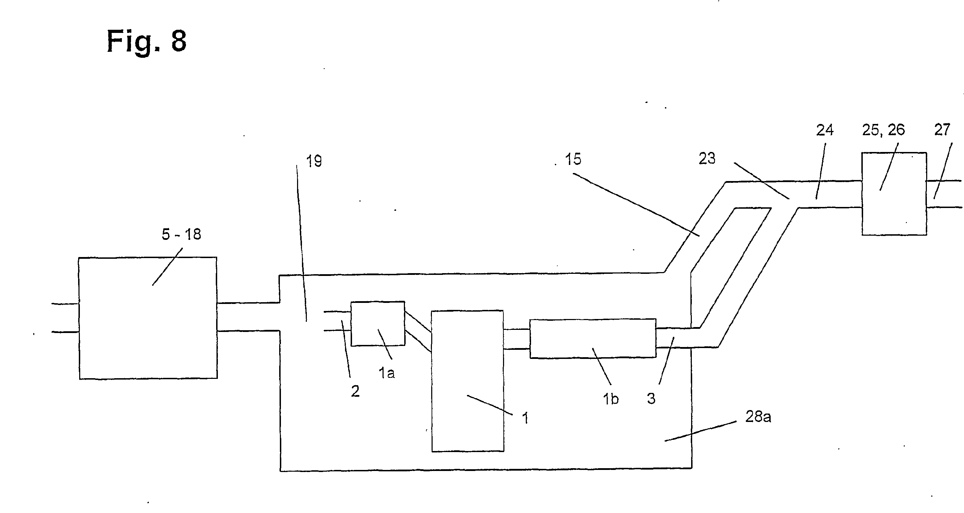

In der nachfolgenden Beschreibung soll die Erfindung anhand der beigefügten Zeichnungsfiguren näher erläutert werden. Dabei zeigt die Fig. 1 schematisch eine erfindungsgemäße Anlage für den Überdruck- und Unterdruckbetrieb, Fig. 2 ist eine Darstellung entsprechend Fig. 1 für Überdruck- und Unterdruckregelung ohne Druckverlustkompensation, Fig. 3 ist eine Darstellung entsprechend Fig. 1 allein für Überdruckregelung, Fig. 4 ist eine Darstellung entsprechend Fig. 1 allein für Unterdruckregelung, Fig. 5 ist eine Darstellung entsprechend Fig. 1 für die hochpräzise Überdruck- und Unterdruckregelung, Fig. 6 ist eine schematische Darstellung einer erfindungsgemäßen Anlage mit einem Prüfling, bestehend aus einem Motor mit auch im eingebauten Zustand vorgesehenen Ansaug- und Abgastrakt, Fig. 7 entspricht Fig. 6, wobei sich der gesamte Motor innerhalb eines geschlossenen Raumes befindet, Fig. 8 ist eine Variante der Anlage von Fig. 7, mit der Box als durchströmter Abschnitt der Versorgungsleitung.

Die erfindungsgemäße Anlage besteht im dargestellten Ausführungsbeispiel mit bereits integrierter Konditionierungsstrecke - in Strömungsrichtung der Luft aus gesehen - aus einem Staubfilter 5 mit der Ansaugöffnung 4, einer Einrichtung zur Förderung von Luft 6 vorzugsweise einem Radialventilator oder einem Gebläse, einer Regelklappe für Unterdruckbetrieb 7, einem Luftkühler 8 - vorzugsweise einem Luft-Kaltwasser Wärmetauscher mit einem durch ein Stellventil für Kaltwasser 9 einstellbaren Durchsatz von Kühlmedium -, einem Tropfenabscheider für Kondensat 10, sowie einem mittels Steuereinrichtung 12 in der Heizleistung regelbaren Lufterhitzer 11. Zur Regelung der Luftfeuchte kann ein Dampferzeuger 13 angeordnet werden, von dem aus Dampf über ein Dampfdosierventil 14 zur Einstellung der Luftfeuchte in die Hauptluftleitung 15 dosiert werden kann. Zur Messung der Luftzustände dienen ein Absolutdruckfühler 16 ein Temperaturfühler 17 und ein Feuchtefühler 18.

Die in diesen Anlagenteilen konditionierte Luft wird durch die Hauptluftleitung 15 der Verzweigungsstelle 19 zwischen der Hauptleitung 20 und dem Ansaugkanal 2 in einer Menge zugeführt, welche der vom Motor maximal verbrauchten Menge entspricht. Damit ist von der vorgeschalteten Konditionierungsstrecke 4 bis 18 immer die gleiche Menge an zuzuführender Luft zu behandeln, was die Auslegung insbesonders der Regelung dieser Konditionierung äußerst einfach macht. Auch können damit alle Veränderungen im Betrieb des zu prüfenden Motors, selbst alle hoch dynamischen Übergänge, aufgefangen werden und der Verbrennungsmaschine 1 wird zu jedem Zeitpunkt eine sicher und konstant konditionierte Menge an Verbrennungsluft zugeführt. In der Hauptleitung 20 kann optional ein kleiner drehzahlregelbarer Axialventilator 21 zur Druckverlustkompensation bzw. zur Einstellung einer genau definierten Druckdifferenz zwischen Ansaugkanal 2 und Abgaskanal 3 des Motors 1 angeordnet werden, der mit Hilfe des Reglers 33 in Abhängigkeit des Differenzdrucks zwischen Mündung und Austritt der Leitung 20 drehzahlgeregelt wird. Die Messung dieses Differenzdrucks erfolgt durch den Differenzdruckfühler 22. Die Leitung 20 und der Abgaskanal 3 der Verbrennungsmaschine 1 münden über in Mündungsstück 23 in den Abluftkanal 24. Am Ende des Abluftkanals 24 ist eine Regelklappe für Überdruckbetrieb 25 angeordnet. Eine Luftfördereinrichtung 26 für Unterdruckbetrieb - vorzugsweise ein Radialventilator oder ein Gebläse - befindet sich vor der Abluftöffnung 27 für den Austritt des Abluftstromes an die Umgebung oder das Abgassystem des Prüfstandes. Allenfalls könnte auch noch ein zusätzlicher Wärmetauscher zwischen der Verbrennungsmaschine 1 und der Luftfördereinrichtung 26 angeordnet sein, vorzugsweise im Abluftkanal 24, wodurch die Auslegung der Luftfördereinrichtung vereinfacht und die Auswahl der möglichen Typen erweitert wird und auch Probleme durch die Abgas/Luft-Mischung hinter der Verbrennungsmaschine 1 und/oder durch Betrieb bei hohem Unterdruck (bis zu 350 bis 400 mbar) vermieden werden.

Zum Betrieb des Systems und zum Einregeln der gewünschten Luftzustände ist eine elektronische Steuer- und Regeleinrichtung 28 vorgesehen, in der alle zum Betrieb des Gerätes notwendigen Steuereinrichtungen und Regler zur Druck- 29 und 30, Temperatur 31 und Feuchte 32 integriert sind. Dabei ist vorteilhafterweise darauf Rücksicht genommen, dass der Massendurchfluss unabhängig vom Absolutdruck im Wesentlichen konstant gehalten wird. Zu diesem Zweck ist von Vorrichtungsseite zumindest eine der Gasfördereinrichtungen 6, 26, 21 in Regelverbindung mit der bezüglich der Verbrennungsmaschine 1 gegenüberliegenden Regeleinrichtung 7, 25 für den Gasdurchfluss. Da bei Überdruckbetrieb bislang nur geringe, vernachlässigbare Druckänderungen gefragt sind, ist dieses Regelkonzept hauptsächlich für den Unterdruckbetrieb wesentlich, wofür die vor der Verbrennungsmaschine 1 angeordnete Regeleinrichtung 7 mit der hinter der Verbrennungsmaschine 1 liegenden Gasfördereinrichtung 25 in Regelverbindung steht. Je nach Stellung der meist als Drosselklappe ausgeführten Regeleinrichtung 7, 25 wird die zumeist von der Drehzahl abhängige Förderleistung der Gasfördereinrichtung 6, 26, 21 eingeregelt.

Die Funktionsweise des Verfahrens kann anhand der Fig. 1 wie folgt beschrieben werden:

Die Verbrennungsmaschine 1 saugt den für die Verbrennung benötigten Luftmassenstrom $\dot{m}_{ein}$ durch den Ansaugkanal 2 an und führt diesen der Verbrennung zu. Der infolge der Verbrennung entstehende Abgasmassenstrom $\dot{m}_{aus}$ wird durch den Abgaskanal 3 wieder ausgestoßen. Aufgabe des Verfahrens ist es, die Luftzustände am Eintritt zum Ansaugkanal 2, d.h. Druck, Temperatur und Feuchte, unabhängig von den Umgebungsbedingungen einzustellen. Weiters soll der Druck am Austritt des Abgaskanals 3 weitgehend jenem am Eintritt des Ansaugkanals 2 entsprechen. Die Luftführung beim Betrieb der Verbrennungsmaschine 1 am Prüfstand ist dabei wie folgt. Infolge der Wirkung der beiden Luftfördereinrichtungen 6, 26 wird ein definierter Luftmassenstrom $\dot{m}_L$ durch die Ansaugöffnung 4 durch die Luftfördereinrichtung 6, die Regelklappe für Unterdruckbetrieb 7, den Luftkühler 8, den Tropfenabscheider 10 und den Lufterhitzer 11 in die Hauptluftleitung 15 gefördert. An der Verzweigung 19 von Hauptleitung 20 und Ansaugkanal 2 erfolgt eine Aufteilung des Luftmassenstromes $\dot{m}L$ in den Hauptleitungs-Luftmassenstrom $\dot{m}_{Bp}$ und in den Verbren-nungsluftmassenstrom $\dot{m}_{ein}$. Der Bypass Luftmassenstrom $\dot{m}_{Bp}$ wird durch einen drehzahlregelbaren Axialventilator zur Druckverlustkompensation 21 gefördert und bei der Mündung 23 des Abgaskanals 3 in die Hauptleitung 20 mit dem Abgasmassenstrom $\dot{m}_{aus}$ zum Abluftmassenstrom $\dot{m}_{Ex}$ zusammengeführt. Dieser Abluftmassenstrom $\dot{m}_{Ex}$ wird durch die Regelklappe für Überdruckbetrieb 25, der Luftfördereinrichtung für Unterdruckbetrieb 26 und die Abluftöffnung 27 in die Umgebung oder das Abluftsystem des Prüfstandes gefördert.

Für die Zusammenhänge der einzelnen Luft- bzw. Abgasmassenströme können die folgenden Beziehungen aufgrund der Massenerhaltungssätze und der Kontinuität angeführt werden:

$$\dot{m}_{ein} = \text{variabel} \qquad \text{als Funktion des Motorbetriebszustandes.} \quad (i)$$

$$\dot{m}_{aus} = \dot{m}_{ein} + \dot{m}_{Br} \qquad\qquad (ii)$$

wobei $\dot{m}_{Br}$ der für die Verbrennung benötigte Massenstrom des Brennstoffes ist.

Bei Verwendung von üblichen flüssigen oder festen Brennstoffen und annähernd stöchiometrischen oder überstöchiometrischen Verbrennungsverfahren gilt jedoch:

$$\dot{m}_{Br} << \dot{m}_{ein} \qquad (iii)$$

z.B. Bei Verwendung von handelsüblichem Dieselkraftstoff beträgt der stöchiometrische Luftbedarf 14,5 kg Luft- / kg Brennstoff und es gilt daher $\dot{m}_{Br} = \dfrac{\dot{m}_{ein}}{14,5}$, was den oben angeführten (iii) Zusammenhang bestätigt.

Aufgrund von (iii) kann für eine grobe Abschätzung der Massenströme der Brennstoffmassenstrom $\dot{m}_{Br}$ vernachlässigt werden und es kann (ii) auch geschrieben werden:

$$\dot{m}_{aus} \approx \dot{m}_{ein} \qquad (iv)$$

Somit kann für die Luftmassenströme $\dot{m}_L$ und $\dot{m}_{Ex}$, die an den Komponenten zur Regelung der Luftzustände auftreten und somit die maßgeblichen Größen für die Regelungsgüte des Verfahrens sind, für alle Betriebszustände der Verbrennungsmaschine (1) geschrieben werden:

$$\dot{m}_L = \dot{m}_{ein} + \dot{m}_{Bp} \qquad (v)$$

und

$$\dot{m}_{Ex} = \dot{m}_{aus} + \dot{m}_{Bp} \qquad (vi)$$

unter Verwendung von (iv) in (v) und (vi) kann somit geschrieben werden:

$$\dot{m}_L \approx \dot{m}_{Ex} \qquad (vii)$$

Daraus ist ersichtlich, dass die für die Regelung der Luftzustände maßgeblichen Luftmassenströme $\dot{m}_L$ und $\dot{m}_{Ex}$ nahezu unabhängig vom Betriebszustand der Verbrennungsmaschine 1 und deren dynamischen Verhalten sind und somit alleine von der Auslegung und der Betriebsweise der regelungstechnischen Komponenten abhängen. Es ist damit ersichtlich, dass mit diesem Verfahren auch dynamischen Änderungen der Betriebsweise der Verbrennungsmaschine gefolgt werden kann. Eine Änderung der Betriebsweise der Verbrennungsmaschine bewirkt lediglich eine Änderung der Temperaturen und damit der Dichte des Luftmassenstromes $\dot{m}_{Ex}$. Diese Änderungen sind auch mit diesem Verfahren durch das Verhalten der Regeleinrichtungen zu kompensieren, können jedoch weitgehend durch die allgemeinen Auslegungsparameter des Systems, wie z.B. Größe des Luftmassenstromes $\dot{m}_L$, beeinflusst werden.

Die Regelung der Zustände des Luftstromes $\dot{m}_L$ und des Drucks des Luftmassenstromes $\dot{m}_{Ex}$ erfolgt dabei wie folgt:

Regelung des Drucks bei Überdruckbetrieb:

Wenn der gewünschte Luftdruck höher als der Umgebungsdruck sein soll, erfolgt die Regelung des Luftdruckes durch Druckanhebung und Förderung des Luftmassenstromes $\dot{m}_L$ durch die Luftfördereinrichtung 6 im Zusammenwirken mit der Regelklappe für Überdruckbetrieb 25. Die Luftfördereinrichtung 6 wird mit konstanter Drehzahl betrieben, wobei der Luftmassenstrom zumindest gleich groß, vorteilhafterweise sogar deutlich größer, gewählt wird, als der maximale Luftverbrauch der Verbrennungsmaschine 1. Durch Drosselung des Luftmassenstromes mit der Regelklappe für Überdruckbetrieb 26 wird das gesamte Leitungssystem vom Austritt der Luftfördereinrichtung 6 bis zur Regelklappe für Überdruckbetrieb 26 auf den gewünschten Luftdruck angehoben. Die Stellung der Regelklappe für Überdruckbetrieb 26 wird dabei durch den elektronischen Regler für die Regelklappe Überdruck 30 eingestellt. Der aktuelle Druck im Rohrleitungssystem wird dabei durch den Absolutdruckfühler 16 gemessen und in ein elektrisches dem Druck proportionales Signal umgewandelt. Dieses Signal wird an den Regler für Regelklappe Überdruck 30 als Ist-Signal übermittelt.

Der Regler 30 vergleicht das Ist-Signal mit dem durch den Benutzer gewünschten Sollwert und erzeugt ein, der Stellung der Regelklappe proportionales, Stellsignal an die Regelklappe Überdruck 26. In dieser Betriebsweise ist die Stellung der Regelklappe für Unterdruckbetrieb 7 vollständig geöffnet, um unerwünschte Drosseleffekte an dieser Klappe zu vermeiden.

Regelung des Drucks bei Unterdruckbetrieb:

Wenn der gewünschte Luftdruck niedriger als der Umgebungsdruck sein soll, erfolgt die Regelung des Luftdruckes durch Drosselung an der Regelklappe für Unterdruckbetrieb 7 und Ansaugen des Luftmassenstromes $\dot{m}_L$ durch die Luftfördereinrichtung für Unterdruckbetrieb 26. Die Luftfördereinrichtung 26 wird mit konstanter Drehzahl betrieben, wobei der Luftmassenstrom wiederum zumindest gleich groß dem maximalen Luftverbrauch des Motors 1 gewählt wird, vorzugsweise sogar wieder deutlich größer gewählt wird. Durch Drosselung des Luftmassenstromes mit der Regelklappe für Unterdruckbetrieb 7 wird das gesamte Leitungssystem von der Regelklappe für Unterdruckbetrieb bis zur Saugseite der Luftfördereinrichtung 26 auf den gewünschten Luftdruck abgesenkt. Die Stellung der Regelklappe für Unterdruckbetrieb 7 wird dabei durch den elektronischen Regler für die Regelklappe Unterdruck 29 eingestellt. Der aktuelle Druck im Rohrleitungssystem wird dabei durch den Absolutdruckfühler 16 gemessen und in ein elektrisches dem Druck proportionales Signal umgewandelt. Dieses Signal wird an den Regler für Regelklappe Unterdruck 29 als Ist-Signal übermittelt. Der Regler 29 vergleicht das Ist-Signal mit dem durch den Benutzer gewünschten Sollwert und erzeugt ein, der Stellung der Regelklappe proportionales, Stellsignal an die Regelklappe Unterdruck 7. In dieser Betriebsweise ist die Stellung der Regelklappe für Überdruckbetrieb 25 vollständig geöffnet, um unerwünschte Drosseleffekte an dieser Klappe zu vermeiden.

Regelung der Temperatur

Die Einstellung der Temperatur des Luftmassenstromes $\dot{m}_{ein}$ erfolgt mit Hilfe der Wirkung des Luftkühlers 8 und des Lufterhitzers 11. Je nach gewünschter Soll-Temperatur kann eine Erwärmung oder Abkühlung des Luftmassenstromes erfolgen. Die aktuelle Ist-Temperatur wird durch den Temperaturfühler 17 gemessen und in ein elektrisches der Temperatur proportionales Signal umgewandelt. Dieses Signal wird an den Regler für Temperatur 31 als Ist-Signal übermittelt. Der Regler 31 vergleicht das Ist-Signal mit dem durch den Benutzer gewünschten Sollwert und erzeugt, je nach Erfordernis zum Kühlen oder Heizen, ein stetiges Stellsignal an das Stellventil für Kaltwasser 9 oder an die Steuereinrichtung für Heizleistung 12. Die Einregelung der gewünschten Soll-Temperatur erfolgt somit durch Einstellen eines erforderlichen Durchsatzes an Kühlmedium durch den Luftkühler und/oder Einstellen der erforderlichen Heizleistung des Lufterhitzers. Es können auch Betriebzustände auftreten, bei denen sowohl gekühlt als auch nachträglich geheizt werden muss (Siehe auch Regelung der Feuchte).

Regelung der Luftfeuchte

Die Einstellung der Feuchte des Luftmassenstromes $\dot{m}_{ein}$ erfolgt mit Hilfe der Wirkung des Luftkühlers 8 und durch Dosierung von Dampf aus dem Dampferzeuger 13. Der Luftmassenstrom $\dot{m}_L$ wird im Luftkühler 8 bis unter die Taupunkttemperatur abgekühlt und infolge der dadurch verursachten Kondensation der im Luftstrom enthaltenen Feuchtigkeit getrocknet. Das entstehende Kondensat wird bei Durchströmen des Tropfenabscheiders abgeschieden und abgeführt. Das Einstellen der gewünschten Feuchtigkeit erfolgt durch Dosieren von Wasserdampf in den Luftstrom des Hauptluftkanals 15. Die aktuelle Ist-Feuchte wird durch den Feuchtefühler 18 gemessen und in ein elektrisches der Feuchte proportionales Signal umgewandelt. Dieses Signal wird an den Regler für Feuchte 32 als Ist-Signal übermittelt. Der Regler 32 vergleicht das Ist-Signal mit dem durch den Benutzer gewünschten Sollwert und erzeugt, je nach Erfordernis zum Kühlen (Entfeuchten) oder Befeuchten, ein stetiges Stellsignal an das Stellventil für Kaltwasser 9 oder das Dampfdosierventil 14.

Mit beiden oben genannten Regelgrößen steht auch das Ziel in Verbindung, die Kondensation (von hauptsächlich Wasserdampf) im verdünnten Abgas zu verhindern. Daher muss die Temperatur des verdünnten Abgases höher als sein Taupunkt sein, welcher für das unverdünnte Abgas im Allgemeinen kleiner ist als 52°C. Es kann daher zusätzlich eine Heizung für das durch den Hauptluftkanal 15 strömende Verbrennungsgas vorgesehen sein. Meist ist jedoch das Abgas der Verbrennungsmaschine viel heißer als das zur Verdünnung des Abgases verwendete Gas (nämlich das nicht von der Verbrennungsmaschine 1 benötigte Verbrennungsgas), sodass das verdünnte Abgas gegenüber dem Verdünnungsgas aufgeheizt ist und es somit in (fast) allen Fällen zu keiner Kondensation kommen wird, auch ohne zusätzliche Heizung.

Kompensation des Druckverlustes in der Hauptleitung

Wenn es infolge besonderer Anforderungen an die Druckregelgüte des Luftmassenstromes im Abgaskanal notwendig ist, kann ein drehzahlregelbarer Axialventilator 21 in der Leitung 20 angeordnet werden. Der Druckverlust in der Leitung 20 wird durch den Differenzdruckfühler 22 gemessen und als elektrisches Ist-Signal an den Drehzahlregler für den Axialventilator 21 übermittelt. Die Einstellung der Drehzahl erfolgt derart, dass der Druckverlust kompensiert und ausgeregelt wird.

Durch Weglassen einzelner Komponenten können unterschiedliche Ausführungsvarianten der Erfindung realisiert werden, beispielsweise eine Anlage gemäß der Erfindung, jedoch nur für den Überdruckbetrieb und Druckverlustkompensation in der Hauptleitung 20, wie sie in Fig.2 dargestellt ist.

Wenn es die Regelgenauigkeit der Abgasgegendruckregelung zulässt und ein geringer und exakt einzustellender Druckunterschied zwischen den Ansaugkanal 2 und dem Abgaskanal 3 zulässig ist, kann auf den drehzahlregelbaren Axialventilator zur Druckverlustkompensation 21 (siehe Fig. 1) sowie auf den Regler für den Axialventilator 33 verzichtet werden.

Ausführungsvariante für reinen Überdruckbetrieb

Eine Ausführungsvariante, die für reinen Überdruckbetrieb (relativ zur Umgebung) geeignet ist, zeigt die Fig. 3. Im Vergleich zur Fig. 1 wird diese Ausführung durch Weglassen der Komponenten zur Herstellung des Unterdruckes dargestellt. In dieser Ausführung fehlen somit die Regelklappe für Unterdruckbetrieb 6 der Fig.1, die Luftfördereinrichtung für Unterdruckbetrieb 26 sowie der Regler für die Regelklappe Unterdruck 29.

Ausführungsvariante für reinen Unterdruckbetrieb (Fig. 4)

Eine Ausführungsvariante, die für reinen Unterdruckbetrieb (relativ zur Umgebung) geeignet ist zeigt die Fig. 4. Im Vergleich zur Fig. 1 wird diese Ausführung durch Weglassen der Komponenten zur Herstellung des Überdruckes dargestellt. In dieser Ausführung fehlen somit die Luftfördereinrichtung für Überdruckbetrieb 6, die Regelklappe für Überdruckbetrieb 25, sowie der Regler für die Regelklappe Überdruck 30 der Fig.1.

Ausführungsvariante für hochpräzise Luftdruckregelung (Fig.5):

Die Fig. 5 zeigt eine Ausführung der Erfindung, mit der eine hochpräzise Druckregelung, sowohl für Überdruck als auch für Unterdruck, realisiert werden kann. Die zur Einregelung des Über- beziehungswiese Unterdruck verwendeten Regelklappen 6, 25 werden dabei durch Parallelschalten je eines Feinregelventiles 7a, 25a, das im Strömungsquerschnitt deutlich kleiner als die Regelklappen dimensioniert ist, ergänzt. In diesem Fall erfolgt die Einregelung des gewünschten Luftdruckes derartig, dass anfänglich eine Grobregelung des Luftdruckes durch die Regelklappen 7 bzw. 25 durchgeführt wird. Nach Unterschreiten einer definierten Regelabweichung des Ist-Druckes vom Soll-Druck wird die Stellung dieser Regelklappen 7, 25 festgehalten und nicht mehr verändert. Die endgültige Einregelung des gewünschten Luftdruckes erfolgt im Anschluss daran mit Hilfe der Feinregelventile 7a und 25a.

Diese Ausführungsvariante hat den Vorteil, dass einerseits mit Hilfe der Regelklappen 7, 25 der Luftdruck sehr schnell nahe an den gewünschten Wert herangeführt werden kann, und andererseits eine hochgenaue Druckregelung mit den fein abgestimmten Feinregelventilen 7a, 25a realisiert werden kann.

In der Praxis ist es besonders vorteilhaft, wenn die Bedingungen am Prüfstand exakt den Gegebenheiten entsprechen, die auch bei bestimmungsgemäßen Betrieb des Prüflings vorliegen, insbesonders bei Fahrzeugmotoren also die auch im Fahrzeug vorgesehenen Luftfilter, Abgasanlagen usw. vorhanden sind. Daher ist, wie in der Fig. 6 schematisch dargestellt ist, vorteilhafterweise die Versorgungsleitung derart ausgeführt, dass die Länge der Versorgungsleitung 15 für die konditionierte Verbrennungsluft zwischen der Abzweigung 19 der Ansaugleitung 2 zur Verbrennungsmaschine 1 und der Einmündung 23 der Abgasleitung 3 im wesentlichen gleich lang ist wie die komplette Motoreneinheit, inklusive aller vorgeschalteten Teile des Ansaugtraktes und des nachgeschalteten Abgastraktes. D.h., dass die Länge zwischen der Abzweigung 19 und der Einmündung 23 dem Abstand zwischen dem Luftfiltereingang 1 a und dem Ende der Auspuffanlage 1 b des Fahrzeuges entsprechen wird.

In Fig. 7 ist eine weitere vorteilhafte Ausführungsform der Anlage dargestellt, welche vom grundlegenden Aufbau jener der Fig. 6 entspricht, nur dass der gesamte Motor, inkl Luftfilter 1 a, Auspuffanlage 1 b, Ansaugleitung 2 und Abgasleitung 3, in eine gegenüber der Umgebung abschließ- und abdichtbare Box 28 gestellt ist, deren Innendruck über eine Leitung 29 auf den Druck der Leitung 15 gebracht wird. Fig. 8 stellt dar, dass die Box von Fig. 7 als durchströmter Abschnitt 28a der Leitung 15 ausgeführt sein kann. Dabei ist es möglich, dass der Motor seine Ansaugluft direkt dieser Box entnimmt, sodass die Verzweigungsstelle 19 an der Ansaugstelle des Motors 1 zu liegen kommt, d.h. durch das offene Ende der Ansaugleitung 2 gebildet wird. Das ist vorteilhaft, weil an der Saugstelle des Motors 1 kein Rohr angeschlossen werden muss, das in manchen Fällen das Verhalten des Ansaugtraktes 1 a, 2 störend beeinflusst.

**Patentansprüche**

1. Verfahren zur Versorgung einer Verbrennungsmaschine mit konditioniertem Verbrennungsgas, insbesondere Luft, vorzugsweise in Prüfständen, umfassend die Zuführung von feuchte- und/oder temperaturkonditioniertem Verbrennungsgas zur Verbrennungsmaschine, wobei

   - zu jedem Zeitpunkt eine im wesentlichen konstante, vollständig konditionierte Menge des Verbrennungsgases bereitgestellt wird, welche Menge zumindest der von der jeweiligen Verbrennungsmaschine maximal benötigten Menge entspricht;
   - von der Verbrennungsmaschine nicht benötigtes Verbrennungsgas an der Verbrennungsmaschine vorbeigeleitet und mit deren Abgas gemischt wird;
   - das Verbrennungsgas/Abgas-Gemisch hinter der Verbrennungsmaschine abgesaugt wird, vorzugsweise mit definiertem Unterdruck, bezogen auf den Umgebungsdruck, **dadurch gekennzeichnet,**

   dass zwischen dem konditionierten Verbrennungsgas und dem Abgas bzw. Verbrennungsgas/Abgas-Gemisch hinter der Verbrennungsmaschine ein Druckgefälle zwischen 0,3 und 5 mbar, vorzugsweise zwischen 0,5 und 3 mbar, eingestellt wird.

2. Verfahren nach Anspruch 1, **dadurch gekennzeichnet, dass** das Verbrennungsgas der Verbrennungsmaschine unter erhöhtem Druck, bezogen auf den Umgebungsdruck, zugeführt bzw. nicht benötigtes Verbrennungsgas an der Verbrennungsmaschine vorbeigeleitet wird.

3. Verfahren nach einem der Ansprüche 1 oder 2, **dadurch gekennzeichnet, dass** der Durchfluss unabhängig vom Absolutdruck im Wesentlichen konstant gehalten wird.

4. Verfahren nach einem der Ansprüche 1, 2 oder 3, **dadurch gekennzeichnet, dass** die unmittelbare Umgebung der Verbrennungsmaschine auf im wesentlichen dem selben Druck gehalten wird wie das konditionierte Verbrennungsgas.

5. Verfahren nach Anspruch 4, **dadurch gekennzeichnet, dass** die Verbrennungsmaschine vom konditionierten Verbrennungsgas umströmt wird.

6. Vorrichtung zur Versorgung einer Verbrennungsmaschine mit konditioniertem Verbrennungsgas, insbesondere Luft, vorzugsweise in Prüfständen, umfassend eine Versorgungsleitung zur Verbrennungsmaschine für feuchte- und/oder temperaturkonditioniertes Verbrennungsgas, allenfalls ein Gebläse in der Versorgungsleitung, wobei

   - die Versorgungsleitung (15) für zumindest die von der jeweiligen Verbrennungsmaschine (1) maximal benötigte Menge an Verbrennungsgas ausgelegt ist und von dieser Versorgungsleitung (15) eine mit der Verbrennungsmaschine (1) verbindbare Ansaugleitung (2) abzweigt;
   - eine mit der Verbrennungsmaschine (1) verbindbare Abgasleitung (3) hinter der Abzweigung der Ansaugleitung (2) in die Versorgungsleitung (15) einmündet, **dadurch gekennzeichnet,**

   dass Einrichtungen (z.B. 21) zur Einstellung eines Druckunterschiedes im Bereich zwischen 0,3 und 5 mbar, vorzugsweise zwischen 0,5 und 3 mbar, zwischen der Abzweigung der Ansaugleitung (2) und der Einmündung der Abgasleitung (3) in jeweils die Versorgungsleitung (15) vorgesehen sind.

7. Vorrichtung nach Anspruch 6, **dadurch gekennzeichnet, dass** Einrichtungen (z.B. 21) zur Sicherstellung einer minimalen, zumindest der Diffusionsgeschwindigkeit von Abgas im konditionierten Verbrennungsgas entsprechenden, Strömungsgeschwindigkeit zwischen der Abzweigung der Ansaugleitung (2) und der Einmündung der Abgasleitung (3) vorgesehen sind.

8. Vorrichtung nach einem der Ansprüche 6 oder 7, **dadurch gekennzeichnet, dass** Einrichtungen (8 - 18) zur Einstellung und Regelung der Temperatur und/oder Feuchte vor der Abzweigung der Ansaugleitung (2) zur Verbrennungsmaschine (1) in der Versorgungsleitung (15) vorgesehen sind, beispielsweise Gaskühler, Tropfenabscheider, Gaserhitzer und Dampfzufuhrleitungen, vorzugsweise mit Dampfdosierventilen.

**9.** Vorrichtung nach einem der Ansprüche 6 bis 8, **dadurch gekennzeichnet, dass** vor der Abzweigung der Ansaugleitung (2) eine Gasfördereinrichtung (6) und hinter der Einmündung der Abgasleitung (3) eine Regeleinrichtung (25, 25a) für den Gasdurchfluss vorgesehen sind.

**10.** Vorrichtung nach einem der Ansprüche 6 bis 9, **dadurch gekennzeichnet, dass** vor der Abzweigung der Ansaugleitung (2) eine Regeleinrichtung (7) für den Gasdurchfluss und hinter der Einmündung der Abgasleitung (3) eine Gasfördereinrichtung (26) vorgesehen sind.

**11.** Vorrichtung nach Anspruch 10, **dadurch gekennzeichnet, dass** zwischen der Verbrennungsmaschine (1) und der Gasfördereinrichtung (26) zumindest ein Wärmetauscher vorgesehen ist.

**12.** Vorrichtung nach einem der Ansprüche 9 bis 11, **dadurch gekennzeichnet, dass** die Regeleinrichtungen (7, 25) für den Gasdurchfluss durch Regelklappen gebildet sind.

**13.** Vorrichtung nach Anspruch 12, **dadurch gekennzeichnet, dass** parallel zu den Regelklappen (7, 25) zumindest ein Feinregelventil (25a) vorgesehen ist.

**14.** Vorrichtung nach einem der Ansprüche 6 bis 13, **dadurch gekennzeichnet, dass** zwischen der Abzweigung der Ansaugleitung (2) und der Einmündung der Abgasleitung (3) eine Gasfördereinrichtung (21) vorgesehen ist.

**15.** Vorrichtung nach einem der Ansprüche 6 bis 14, **dadurch gekennzeichnet, dass** Einrichtungen zur Laminarisierung der Strömung in der Versorgungsleitung, vorzugsweise zumindest zwischen der Abzweigung der Ansaugleitung (2) und der Einmündung der Abgasleitung (3), vorgesehen sind.

**16.** Vorrichtung nach einem der Ansprüche 6 bis 15, **dadurch gekennzeichnet, dass** in der Versorgungsleitung (15) zwischen der Abzweigung der Ansaugleitung (2) und der Einmündung der Abgasleitung (3) ein Wellenwiderstand und/oder ein Schalldämpfer vorgesehen ist.

**17.** Vorrichtung nach einem der Ansprüche 6 bis 16, **dadurch gekennzeichnet, dass** zumindest eine der Gasfördereinrichtungen (6, 26, 21) in Regelverbindung mit der bezüglich der Verbrennungsmaschine (1) gegenüberliegenden Regeleinrichtung (7, 25) für den Gasdurchfluss steht.

**18.** Vorrichtung nach Anspruch 17, **dadurch gekennzeichnet, dass** die Förderleistung der Gasfördereinrichtung (6, 26, 21) in Abhängigkeit von der Stellung der gegenüberliegenden Regeleinrichtung (7, 25) einstellbar ist.

**19.** Vorrichtung nach einem der Ansprüche 6 bis 18, **dadurch gekennzeichnet, dass** der Abstand zwischen der Abzweigung (19) der Ansaugleitung (2) und der Einmündung (23) der Abgasleitung (23) im wesentlichen dem Abstand zwischen dem Luftfiltereingang (1 a) und dem Ende der Auspuffanlage (1 b) des Fahrzeuges entspricht, dessen Verbrennungsmaschine (1) mit dem konditionierten Verbrennungsgas versorgt wird.

**20.** Vorrichtung nach einem der Ansprüche 6 bis 19, **dadurch gekennzeichnet, dass** ein geschlossener Raum (28) zur Aufnahme der Verbrennungsmaschine (1) vorgesehen ist, welcher Raum (28) mit dem Abschnitt zwischen der Abzweigung der Ansaugleitung (2) und der Einmündung der Abgasleitung (3) der Versorgungsleitung (15) verbunden ist.

**21.** Vorrichtung nach einem der Ansprüche 6 bis 20, **dadurch gekennzeichnet, dass** im Abschnitt der Versorgungsleitung (15) zwischen der Abzweigung der Ansaugleitung (2) und der Einmündung der Abgasleitung (3) ein geschlossener Raum (28a) zur Aufnahme der Verbrennungsmaschine (1) vorgesehen ist.

**Claims**

**1.** Method for supplying an internal combustion engine with conditioned combustion gas, in particular air, preferably in test rigs, comprising the delivery of humidity- and/or temperature-conditioned combustion gas to the internal combustion engine, wherein

- a substantially constant and fully conditioned quantity of combustion gas is provided at each instant, said quantity corresponding to at least the maximum quantity required by the respective internal combustion engine;

- combustion gas which is not required by the internal combustion engine bypasses the internal combustion engine and is mixed with the exhaust gas therefrom;
- the combustion gas/exhaust gas mixture is extracted downstream of the internal combustion engine, preferably with a defined negative pressure relative to the ambient pressure,

**characterized in that** a pressure gradient between 0.3 and 5 mbar, preferably between 0.5 and 3 mbar, is set between the conditioned combustion gas and the exhaust gas or the combustion gas/exhaust gas mixture downstream of the internal combustion engine.

2. Method according to Claim 1, **characterized in that** the combustion gas from the internal combustion engine is delivered at increased pressure relative to the ambient pressure, and combustion gas which is not required bypasses the internal combustion engine.

3. Method according to one of Claims 1 or 2, **characterized in that** the through flow is kept substantially constant regardless of the absolute pressure.

4. Method according to one of Claims 1, 2 or 3, **characterized in that** the immediate environment of the internal combustion engine is kept at substantially the same pressure as the conditioned combustion gas.

5. Method according to Claim 4, **characterized in that** the conditioned combustion gas flows around the internal combustion engine.

6. Device for supplying an internal combustion engine with conditioned combustion gas, in particular air, preferably in test rigs, comprising a supply line to the internal combustion engine for the humidity- and/or temperature-conditioned combustion gas, if necessary a blower in the supply line, wherein

- the supply line (15) is designed for at least the maximum quantity of combustion gas required by the respective internal combustion engine (1) and an intake line (2) which can be connected to the internal combustion engine (1) branches off from this supply line (15);
- an exhaust gas line (3) which can be connected to the internal combustion engine (1) downstream of the junction of the intake line (2) opens into the supply line (15),

**characterized in that** arrangements (e.g. 21) for setting a pressure difference in the range between 0.3 and 5 mbar, preferably between 0.5 and 3 mbar, between respectively the junction of the intake line (2) and the opening of the exhaust gas line (3) into the supply line (15) are provided.

7. Device according to Claim 6, **characterized in that** arrangements (e.g. 21) for ensuring a minimum flow rate, corresponding at least to the exhaust gas diffusion rate in the conditioned combustion gas, are provided between the junction of the intake line (2) and the opening of the exhaust gas line (3).

8. Device according to one of Claims 6 or 7, **characterized in that** arrangements (8 - 18) for setting and regulating the temperature and/or humidity are provided upstream of the junction of the intake line (2) to the internal combustion engine (1) in the supply line (15), by way of example gas coolers, droplet separators, gas heaters and steam supply lines, preferably with steam metering valves.

9. Device according to one of Claims 6 to 8, **characterized in that** a gas conveying arrangement (6) is provided upstream of the junction of the intake line (2) and a regulating arrangement (25, 25a) for the gas through flow is provided downstream of the opening of the exhaust gas line (3).

10. Device according to one of Claims 6 to 9, **characterized in that** a regulating arrangement (7) for the gas through flow is provided upstream of the junction of the intake line (2) and a gas conveying arrangement (26) is provided downstream of the opening of the exhaust gas line (3).

11. Device according to Claim 10, **characterized in that** at least one heat exchanger is provided between the internal combustion engine (1) and the gas conveying arrangement (26).

12. Device according to one of Claims 9 to 11, **characterized in that** the regulating arrangements (7, 25) for the gas through flow are formed by regulating flaps.

13. Device according to Claim 12, **characterized in that** at least one fine regulating valve (25a) is provided parallel to the regulating flaps (7, 25).

14. Device according to one of Claims 6 to 13, **characterized in that** a gas conveying arrangement (21) is provided between the junction of the intake line (2) and the opening of the exhaust gas line (3).

15. Device according to one of Claims 6 to 14, **characterized in that** arrangements for laminarization of the flow are provided in the supply line, preferably at least between the junction of the intake line (2) and the opening of the exhaust gas line (3).

16. Device according to one of Claims 6 to 15, **characterized in that** a characteristic impedance and/or a sound absorber is provided in the supply line (15) between the junction of the intake line (2) and the opening of the exhaust gas line (3).

17. Device according to one of Claims 6 to 16, **characterized in that** at least one of the gas conveying arrangements (6, 26, 21) is in regulating communication with the regulating arrangement (7, 25) for the gas through flow which lies opposite with respect to the internal combustion engine (1).

18. Device according to Claim 17, **characterized in that** the conveying power of the gas conveying arrangement (6, 26, 21) is adjustable depending on the position of the opposing regulating arrangement (7, 25).

19. Device according to one of Claims 6 to 18, **characterized in that** the distance between the junction (19) of the intake line (2) and the opening (23) of the exhaust gas line (23) corresponds substantially to the distance between the air filter inlet (1 a) and the end of the exhaust system (1 b) of a vehicle, the internal combustion engine (1) of which is supplied with the conditioned combustion gas.

20. Device according to one of Claims 6 to 19, **characterized in that** a closed compartment (28) is provided to accommodate the internal combustion engine (1), which compartment (28) is connected to the portion of the supply line (15) between the junction of the intake line (2) and the opening of the exhaust gas line (3).

21. Device according to one of Claims 6 to 20, **characterized in that** a closed compartment (28a) to accommodate the internal combustion engine (1) is provided in the portion of the supply line (15) between the junction of the intake line (2) and the opening of the exhaust gas line (3).

## Revendications

1. Procédé pour l'alimentation d'un moteur à combustion avec un gaz de combustion conditionné, en particulier de l'air, de préférence sur des bancs d'essai, comprenant l'alimentation de gaz de combustion conditionné en humidité et/ou en température vers le moteur à combustion, dans lequel

   - à tout moment, une quantité de gaz de combustion essentiellement constante et entièrement conditionnée est mise à disposition, ladite quantité correspondant au moins à la quantité maximale nécessaire au moteur à combustion respectif ;
   - le gaz de combustion non utilisé par le moteur à combustion passe à côté du moteur à combustion pour être mélangé au gaz d'échappement de celui-ci ;
   - le mélange de gaz de combustion/gaz d'échappement est aspiré derrière le moteur à combustion, de préférence avec une sous-pression définie par rapport à la pression environnante, **caractérisé en ce que**

   entre le gaz de combustion conditionné et le gaz d'échappement ou le mélange gaz de combustion/gaz d'échappement, une chute de pression entre 0,3 et 5 mbar, de préférence entre 0,5 et 3 mbar, est réglée en aval du moteur à combustion.

2. Procédé selon la revendication 1, **caractérisé en ce que** le gaz de combustion du moteur à combustion est alimenté sous pression élevée par rapport à la pression environnante, ou le gaz de combustion non utilisé passe à côté du moteur à combustion.

3. Procédé selon l'une des revendications 1 ou 2, **caractérisé en ce que** l'écoulement est maintenu essentiellement constant indépendamment de la pression absolue.

**4.** Procédé selon l'une des revendications 1, 2 ou 3, **caractérisé en ce que** l'environnement direct du moteur à combustion est maintenu essentiellement à la même pression que le gaz de combustion conditionné.

**5.** Procédé selon la revendication 4, **caractérisé en ce que** le moteur à combustion est contourné par le gaz de combustion conditionné.

**6.** Dispositif pour l'alimentation d'un moteur à combustion en gaz de combustion conditionné, en particulier en air, de préférence sur des bancs d'essai, comprenant une conduite d'alimentation vers le moteur à combustion pour un gaz de combustion conditionné en humidité et/ou en température, éventuellement une soufflerie dans la conduite d'alimentation, dans lequel

- la conduite d'alimentation (15) est conçue au moins pour la quantité de gaz de combustion maximale nécessaire au moteur à combustion (1) respectif, et une conduite d'aspiration (2) apte à être reliée au moteur à combustion (1) bifurque à partir de cette conduite d'alimentation (15) ;
- une conduite d'échappement (3) apte à être reliée au moteur à combustion (1) débouche dans la conduite d'alimentation (15) derrière la bifurcation de la conduite d'aspiration (2), **caractérisé en ce que**

des moyens (par exemple 21) pour le réglage d'une différence de pression dans la plage entre 0,3 et 5 mbar, de préférence entre 0,5 et 3 mbar, sont prévus entre la bifurcation de la conduite d'aspiration (2) et l'embouchure de conduite d'échappement (3) respectivement dans la conduite d'alimentation (15).

**7.** Dispositif selon la revendication 6, **caractérisé en ce que** des moyens (par exemple 21) sont prévus pour assurer une vitesse minimale d'écoulement entre la bifurcation de la conduite d'aspiration (2) et l'embouchure de la conduite d'échappement (3), correspondant au moins à la vitesse de diffusion du gaz d'échappement dans le gaz de combustion conditionné.

**8.** Dispositif selon l'une des revendications 6 ou 7, **caractérisé en ce que** des moyens (8 - 18) sont prévus dans la conduite d'alimentation (15) pour l'ajustement et le réglage de la température et/ou de l'humidité en amont de la bifurcation de la conduite d'aspiration (2) vers le moteur à combustion (1), par exemple des refroidisseurs de gaz, des séparateurs de gouttes, des réchauffeurs de gaz et des conduites d'alimentation de vapeur, de préférence avec des soupapes de dosage de vapeur.

**9.** Dispositif selon l'une des revendications 6 à 8, **caractérisé en ce qu'**il est prévu un moyen de transport de gaz (6) en amont de la bifurcation de la conduite d'aspiration (2), et un moyen de réglage (25, 25a) en aval de l'embouchure de la conduite d'échappement (3), pour le passage de gaz.

**10.** Dispositif selon l'une des revendications 6 à 9, **caractérisé en ce qu'**il est prévu un moyen de réglage (7) en amont de la bifurcation de la conduite d'aspiration (2), pour le passage de gaz, et un moyen de transport de gaz (26) en aval de l'embouchure de la conduite d'échappement (3).

**11.** Dispositif selon la revendication 10, **caractérisé en ce qu'**il est prévu au moins un échangeur de chaleur entre le moteur à combustion (1) et le moyen de transport de gaz (26).

**12.** Dispositif selon l'une des revendications 9 à 11, **caractérisé en ce que** les moyens de réglage (7, 25) pour le passage de gaz sont formés par des clapets de réglage.

**13.** Dispositif selon la revendication 12, **caractérisé en ce qu'**il est prévu au moins une soupape de réglage fin (25a) parallèlement aux clapets de réglage (7, 25).

**14.** Dispositif selon l'une des revendications 6 à 13, **caractérisé en ce qu'**il est prévu un moyen de transport de gaz (21) entre la bifurcation de la conduite d'aspiration (2) et l'embouchure de la conduite d'échappement (3).

**15.** Dispositif selon l'une des revendications 6 à 14, **caractérisé en ce qu'**il est prévu des moyens pour le laminage du flux dans la conduite d'alimentation, de préférence au moins entre la bifurcation de la conduite d'aspiration (2) et l'embouchure de la conduite d'échappement (3).

**16.** Dispositif selon l'une des revendications 6 à 15, **caractérisé en ce qu'**il est prévu une impédance caractéristique et/ou un silencieux dans la conduite d'alimentation (15), entre la bifurcation de la conduite d'aspiration (2) et l'embouchure de la conduite d'échappement (3).

**17.** Dispositif selon l'une des revendications 6 à 16, **caractérisé en ce qu'**au moins l'un des moyens de transport de gaz (6, 26, 21) se trouve relié par réglage au moyen de réglage (7, 25) situé en face du moteur à combustion (1) pour le passage de gaz.

**18.** Dispositif selon la revendication 17, **caractérisé en ce que** les performances des moyens de transport de gaz (6, 26, 21) peuvent être réglées en fonction de la position du moyen de réglage (7, 25) situé en face.

**19.** Dispositif selon l'une des revendications 6 à 18, **caractérisé en ce que** l'espacement entre la bifurcation (19) de la conduite d'aspiration (2) et l'embouchure (23) de la conduite d'échappement (23) correspond quasiment à l'espacement entre l'entrée de filtre à air (1 a) et l'extrémité du système d'échappement (1b) du véhicule dont le moteur à combustion (1) est alimenté avec le gaz de combustion conditionné.

**20.** Dispositif selon l'une des revendications 6 à 19, **caractérisé en ce qu'**il est prévu une enceinte fermée (28) pour l'admission du moteur à combustion (1), ladite enceinte (28) étant reliée à la section entre la bifurcation de la conduite d'aspiration (2) et l'embouchure de la conduite d'échappement (3) de la conduite d'alimentation (15).

**21.** Dispositif selon l'une des revendications 6 à 20, **caractérisé en ce qu'**il est prévu une enceinte fermée (28a) pour l'admission du moteur à combustion (1) dans la section de la conduite d'alimentation (15) entre la bifurcation de la conduite d'aspiration (2) et l'embouchure de la conduite d'échappement (3).

Fig. 1

Signal- und Steuerleitungen

Fig. 2

Fig. 3

Fig. 4

Signal- und Steuerleitungen

# Fig. 5

Signal- und Steuerleitungen

# Fig. 6

EP 1 336 035 B1

# Fig. 7

Fig. 8

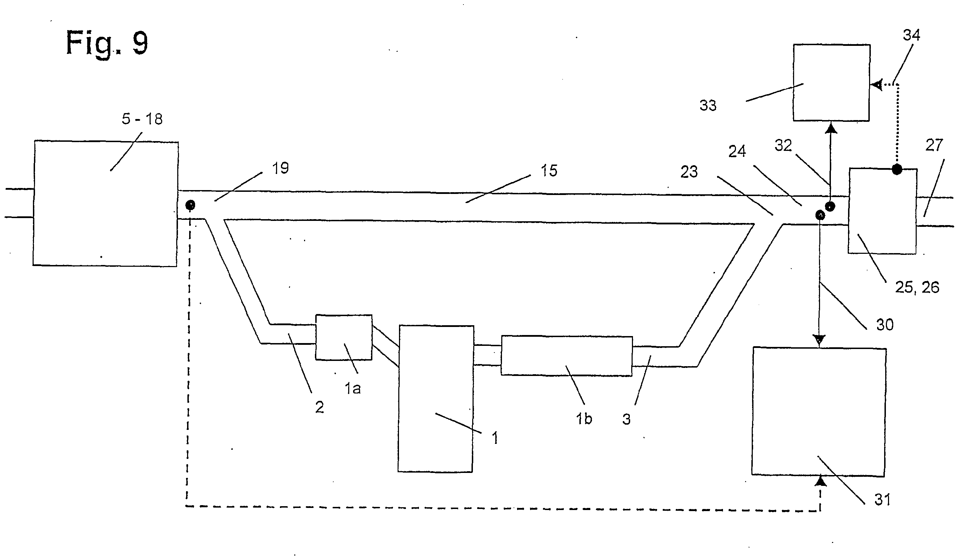

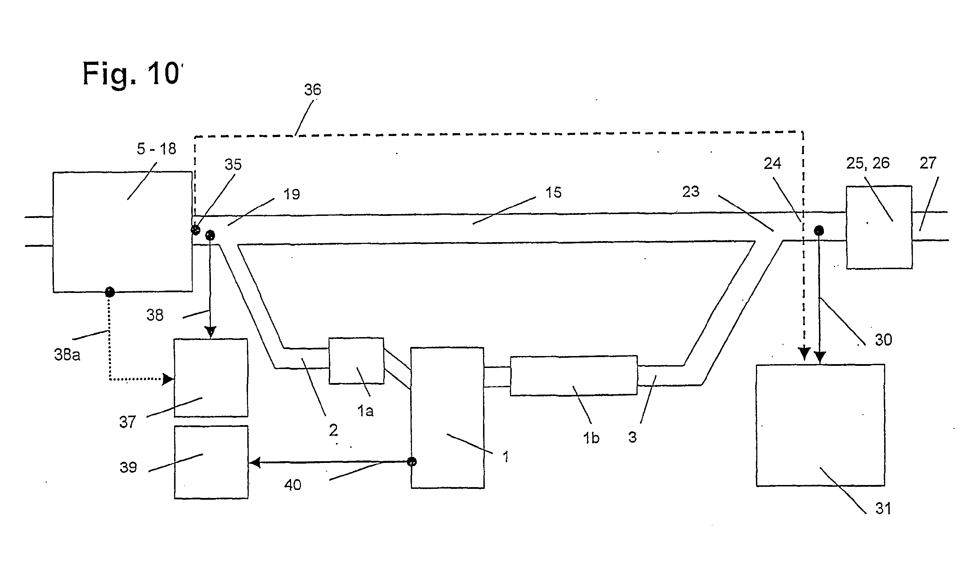

Fig. 9

# Fig. 10

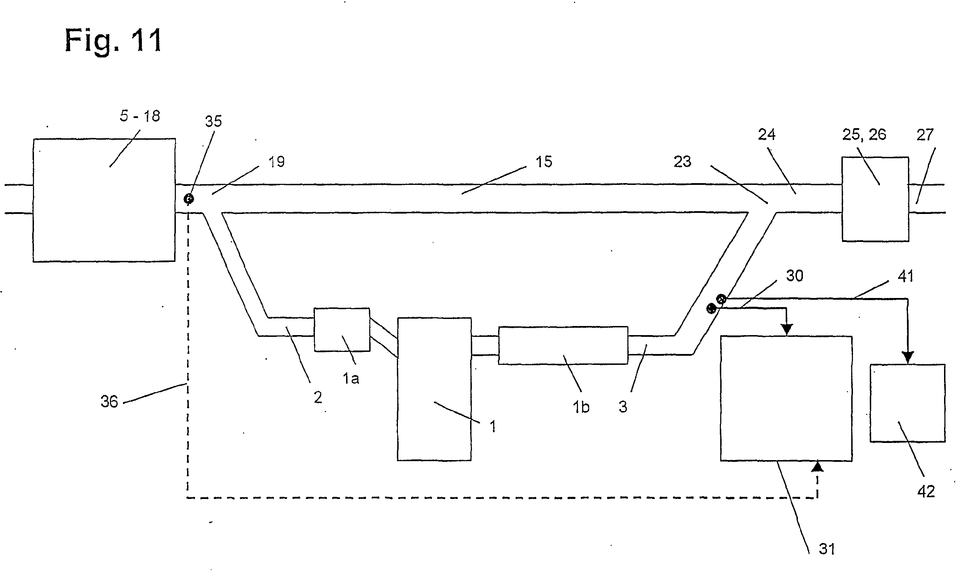

Fig. 11

EP 1 336 035 B1

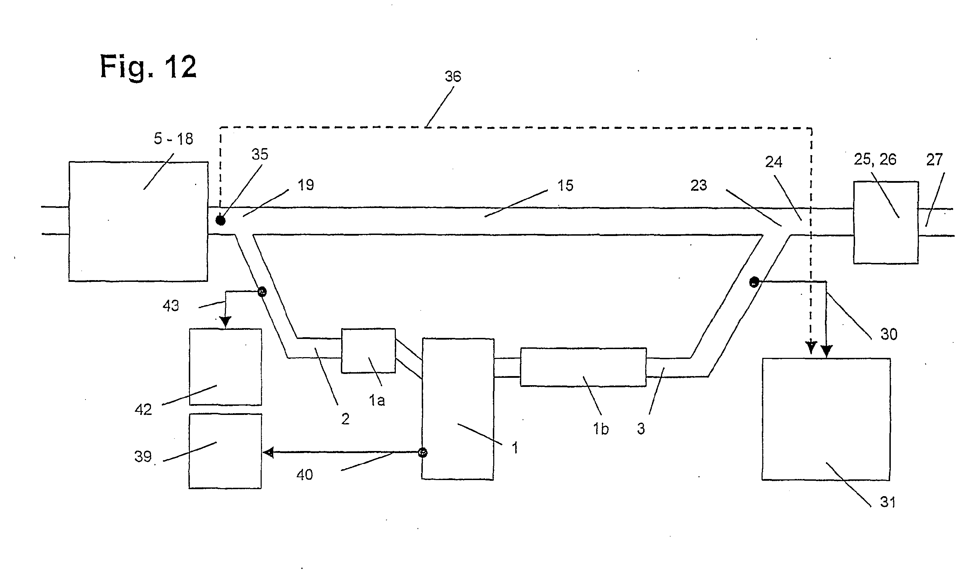

## Fig. 12

EP 1 336 035 B1

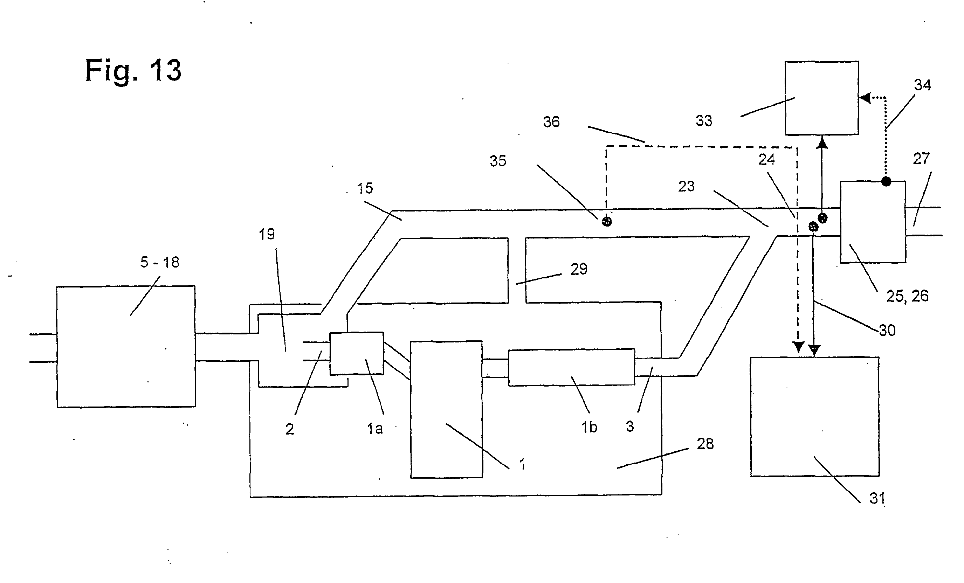

Fig. 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4015818 A
- DE 2536047 A1
- DE 3544247 A
- DE 4231681 A
- US 6112523 A
- DE 19857059 A
- US 5406788 A
- US 5175997 A
- DE 4317867 A